# EUROPÄISCHE PATENTSCHRIFT

(11) **EP 0 635 684 B1**
(45) Veröffentlichungstag und Bekanntmachung des Hinweises auf die Patenterteilung: **23.10.1996**
(21) Anmeldenummer: 94106623.5
(22) Anmeldetag: 28.04.1994
(51) Int. Cl.: F24D 3/14

(54) **Befestigungssystem für Rohrhalter für Fussbodenheizungsrohre**
Fixing device for support clamps for pipes for underfloor heating
Système de fixation pour élément de support pour tuyaux de chauffage par le sol

(30) Priorität: 23.07.1993 DE 4324695
(43) Veröffentlichungstag der Anmeldung: 25.01.1995
(73) Patentinhaber: D.F. LIEDELT " VELTA" PRODUKTIONS- UND VERTRIEBS-GMBH, D-22851 Norderstedt (DE)
(72) Erfinder: Eckert, Rainer, Dipl.-Ing., D-71636 Ludwigsburg (DE); Grill, Oliver, D-73079 Süssen (DE); Krieg, Joachim, D-73525 Schwäbisch-Gmünd (DE)
(74) Vertreter: von Raffay, Vincenz, Dipl.-Ing.

(56) Entgegenhaltungen:
- DE-A- 3 014 789
- DE-A- 3 931 805
- DE-U- 8 103 322

## Beschreibung

Die Erfindung betrifft ein Befestigungssystem nach dem Oberbegriff des Patentanspruches 1. Derartige Befestigungssysteme sind in der unterschiedlichsten Ausgestaltung bekannt. Sie dienen der mechanischen Hilfe zur Befestigung von Rohrhaltern auf den Drähten von Trägermatten, Bewehrungsgittern oder dergleichen.

Die Heizungsrohre von Fussbodenheizungen müssen auf der Unterlage, auf der sie verlegt werden, bis zum Aufbringen einer abschliessenden Deckschicht (z.B. Estrich) fixiert werden. Bei den Unterlagen handelt es sich in der Regel um Isolierplatten aus Kunststoff, die oftmals noch mit einer Folie abgedeckt sind. Bei bereits bekannten Befestigungssystemen kommen entweder spezielle Rohrhalter, die direkt in die Isolierplatten eingebracht werden, zum Einsatz, oder es werden Baustahlträgermatten unterschiedlicher Gitterweiten in Verbindung mit auf diesen anzubringenden Rohrhaltern verwendet. Mit einem derartigen System befasst sich die vorliegende Erfindung.

Bei der Befestigung von Rohrhaltern, die auf den Drähten von Bauträgermatten oder dergleichen zu befestigen sind, treten zwei Probleme auf. Zum einen muss die Tätigkeit in aller Regel in knieender oder stark gebeugter und damit hochbeanspruchender Körperhaltung durchgeführt werden. Zum anderen sind bei der eigentlichen Übertragung durch die Arbeitsperson relativ hohe Hand- bzw. Fingerkräfte aufzubringen, um den Rohrhalter formschlüssig auf dem Draht der ausgewählten Matte zu befestigen.

Aus der AT-PS 372 169 ist ein Befestigungssystem der eingangs genannten Art bekannt. Die Rohrhalter werden bei dieser bekannten Vorrichtung lediglich durch den Stempel mit ihrem Tunnel auf den Draht der Trägermatte aufgedrückt, ohne daß der Rohrhalter hierbei besonders beeinflußt wird. Der Tunnel ist im Querschnitt so gestaltet, daß die Befestigung leicht möglich ist. D. h., die in Aufsetzrichtung auf den Draht gerichtete Öffnung des Tunnels ist relativ groß, so daß die Befestigung leicht möglich, andererseits aber nicht besonders sicher ist.

Der Erfindung liegt nun die Aufgabe zugrunde, ein Befestigungssystem der eingangs genannten Art zu schaffen, bei dem Befestigungsvorrichtung und Rohrhalter so zusammenwirken, daß das Aufsetzen des Rohrhalters leicht möglich ist, andererseits aber für eine sichere Befestigung auf dem Draht gesorgt wird.

Diese Aufgabe wird durch das Kennzeichen des Anspruches 1 gelöst.

Erfindungsgemäß wird grundsätzlich eine Befestigungsvorrichtung geschaffen, die es der Bedienungsperson erlaubt, in normaler, aufrechter Haltung zu arbeiten und dabei relativ geringe Kräfte aufzuwenden. Der Rohrhalter ist der Befestigungsvorrichtung angepasst, damit dieser sicher und ohne Schwierigkeiten an der ausgewählten Stelle auf dem Draht befestigt werden kann.

Der zu befestigende Rohrhalter wird in dem Auswurfschacht angeordnet. An Rohrhalter und Auswurfschacht sind besondere Schrägflächen vorgesehen, die bei Niederdrücken des Auswurfstempels durch Betätigung des Bedienungshebels aufeinandergleiten und so bewirken, daß die auf den Draht aufzusetzende Tunnelöffnung, d.h. ihr Eingangsbereich, gespreizt wird, so daß das Aufsetzen ohne Schwierigkeiten und sicher erfolgen kann. Gleichzeitig wird eine Art Schnappbewegung in Richtung auf den Draht in dem Moment erzeugt, wo die Schrägflächen des Rohrhalters über die Schrägflächen des Aufnahmeschachtes geglitten sind. Dieses ist für die Bedienungsperson akustisch wahrnehmbar. Gleichzeitig federt der Rohrhalter in seine Ausgangslage zurück.

Wenn das Befestigungssystem in vorteilhafter Weise so ausgebildet ist, wie in den Ansprüchen 2 und 3 und insbesondere, wie in Anspruch 4 unter Schutz gestellt, dann sorgt das Magazin dafür, daß in dem Aufnahmeschacht immer ein aufzusetzender Rohrhalter vorhanden ist. Die Förderung der in dem Magazin befindlichen Rohrhalter findet vorzugsweise durch Schwerkrafteinwirkung statt.

Eine Sperre am Aufgabeende des Magazins verhindert, daß einmal aufgesteckte Rohrhalter versehentlich wieder aus dem Magazin herausfallen.

In vorteilhafter Weise kann das Befestigungssystem so ausgebildet werden, wie in Anspruch 6 angegeben. In diesem Falle sorgen die keilförmigen Führungshilfen dafür, daß die Bedienungsperson den Auswurfschacht, d.h. die Austrittsöffnung nung dieses Auswurfschachtes, richtig auf den ausgewählten Draht aufsetzt.

Dieses richtige Aufsetzen wird noch durch den Positionierstab nach Anspruch 7 erleichtert.

Im folgenden wird die Erfindung unter Hinweis auf die Zeichnung anhand eines Ausführungsbeispieles näher erläutert.

Es zeigt:
- Fig. 1: eine schematische, teilweise geschnittene, Seitenansicht einer Befestigungsvorrichtung zur Verwendung in einem Befestigungssystem nach der Erfindung;
- Fig. 2: eine perspektivische Ansicht des Aufnahmeschachtes der Befestigungsvorrichtung von unten;
- Fig. 3a bis 3c: schematische Seitenansichten des unteren Teiles der Befestigungsvorrichtung, insbesondere des Auswurfschachtes zur Verdeutlichung der entscheidenden Abschnitte und Bewegungen beim Aufsetzen eines Rohrhalters auf einen Draht;
und
- Fig. 4: eine Seitenansicht eines in dem Befestigungssystem verwendetne Rohrhalters.

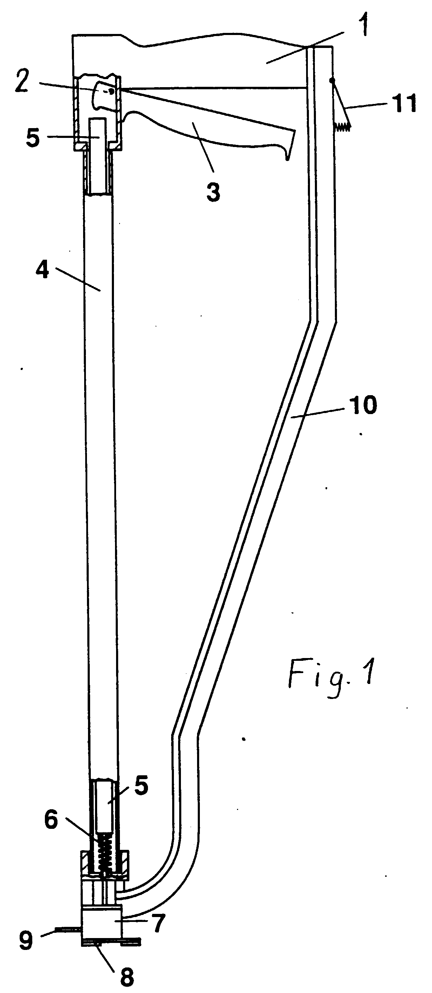

In Fig. 1 ist eine Befestigungsvorrichtung dargestellt. Diese besteht aus einem Handgriff 1, der einen Bedienungshebel 3 enthält, der um einen Punkt 2 schwenkbar ist. Von dem Handgriff 1 verläuft ein Führungsrohr 4 zu einem Auswurfschacht 7. In dem Führungsrohr ist ein Auswurfstempel 5 hin- und herbewegbar geführt. Am unteren Ende ist eine Rückstellfeder 6 für den Auswurfstempel 5 vorgesehen. Seitlich neben dem Innenraum 14 des Auswurfschachtes 7 sind keilförmige Führungshilfen oder -flächen 8 vorgesehen. Ein Positionierstab ist mit 9 bezeichnet.

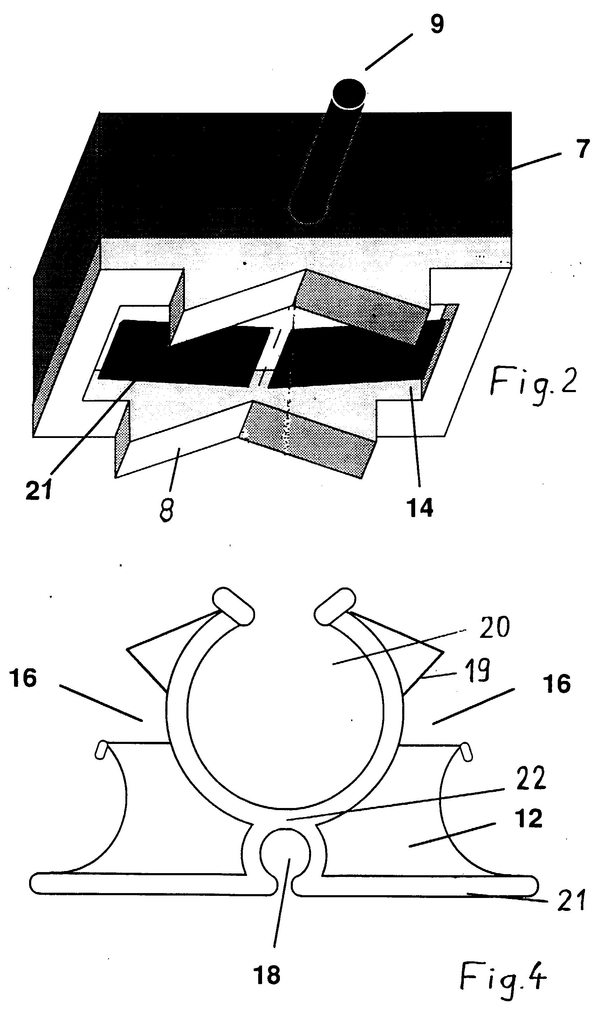

In Fig. 2 ist der Auswurfschacht 7 von unten gesehen perspektivisch dargestellt. Der Innenraum 14 des Auswurfschachtes 7 ist ebenso erkennbar, ebenso wie die Führungshilfen 8 und der Positionierstab 9.

In Fig. 4 ist eine Ausführungsform eines Rohrhalters 12 in Seitenansicht dargestellt. Dieser Rohrhalter weist eine Öffnung 20 zur Aufnahme des Heizungsrohres (nicht gezeigt) sowie einen Tunnel 18 zum Aufsetzen auf den Draht 15 einer Trägermatte oder dergleichen auf. Die beiden Öffnungen 20 und 18 sind durch einen federnden Abschnitt 22 miteinander verbunden, so daß sie Aufsetzöffnung oder der Aufsetzschlitz des Tunnels 19 sich erweitert, wenn die Öffnung 20 für das Heizungsrohr zusammengedrückt wird. Ausnehmungen sind mit 16 bezeichnet. Weiterhin ist eine Aufsetzfläche 21 vorgesehen.

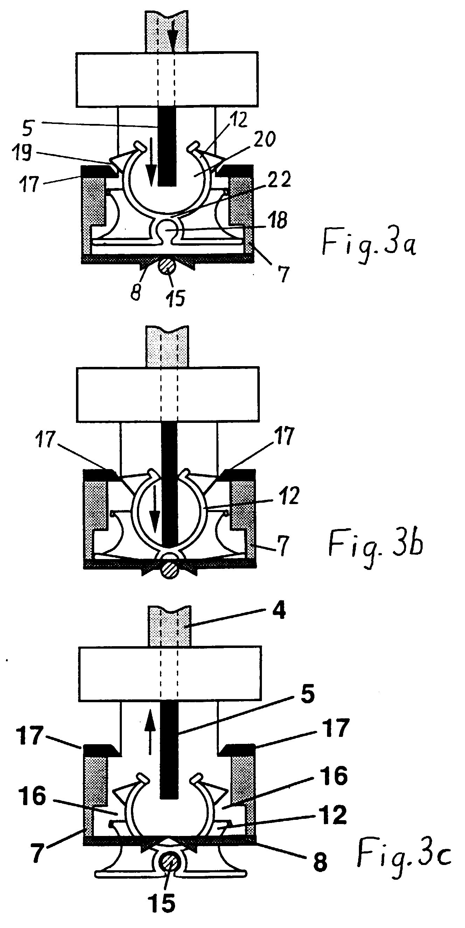

An jedem Rohrhalter 12 sind in Gebrauchslage nach oben gerichtete Schrägflächen 19 vorgesehen, denen Schrägflächen 17 am Auswurfschacht 7 entsprechen. Dieses wird im einzelnen in Verbindung mit den Fig. 3a bis 3c erläutert.

Auf dem Magazin 10 der Befestigungsvorrichtung werden eine Anzahl von Rohrhaltern 12 angeeordnet, wobei die gegen eine Feder wirkende Sperre 11 ein unbeabsichtigtes Herausfallen verhindert. Das Magazin 10 stellt einen entsprechend gebogenen Stab dar, auf den die Rohrhalter 12 mit der Öffnung 20 aufgesetzt werden und unter Schwerkraftwirkung nach unten gleiten, bis der am weitesten unten liegende Rohrhalter in den Innenraum 14 des Auswurfschachtes 7 gelangt. Hier nimmt er die in Fig. 3a gezeigte Stellung ein.

Wenn die Bedienungsperson jetzt den Bedienungshebel 3 niederdrückt und um den Punkt 2 schwenkt, wirkt das kurze Ende des Hebels auf den Auswurfstempel 5 und drückt diesen, wie durch den Pfeil in Fig. 3a angedeutet, nach unten. Hierbei gleiten die Schrägflächen 19 des Rohrhalters auf den Schrägflächen 17 des Auswurfschachtes 7. Der Eintrittsschlitz des Tunnels 18 wird, bedingt durch die Federwirkung, im Bereich 22 gespreizt, so daß ein leichtes Aufsetzen auf den Draht 15 möglich ist. Beim Überschreiten der ungefähr in Fig. 3 dargestellten Stellung, in der die Öffnung 20 des Rohrhalters 12 am weitesten zusammen zusammengedrückt ist, kommen die Schrägflächen 19 plötzlich von den Schrägflächen 17 frei, wodurch die Bewegung nach unten ruckartig unterstützt wird. Der Tunnel 18 schnappt auf den Draht 15 auf. Dieses kann die Bedienungsperson hören, so daß sie weiß, daß der Befestigungsvorgang beendet ist. Die Bedienungsperson kann dann die Befestigungsvorrichtung abheben, so, wie es in Fig. 3c angedeutet ist. Der Auswurfstempel 5 wird durch die Rückstellfeder 6 zurück in seine Ausgangslage bewegt. Die Vorrichtung ist fertig für den nächsten Befestigungsvorgang.

Die an der Unterseite des Auswurfschachtes 7 vorgesehenen keilförmigen oder schrägen Führungshilfen 8 erleichtern das Aufsetzen der Bedienungsvorrichtung auf den ausgewählten Draht 15. Wenn der Draht nicht genau mittig sitzt, gleitet er auf den entsprechenden Führungsflächen 8, bis er die gewünschte Mittenstellung einnimmt. Dieses Aufsetzen wird auch durch den Positionierstab 8 ergänzt, den die Bedienungsperson von oben erkennen kann und nach Art einer Kimme in Deckung mit dem Draht 15 bringt.

Durch das Befestigungssystem, bestehend aus der Befestigungsvorrichtung (Fig. 1) und einer Vielzahl von Rohrhaltern (Fig. 4), ist es möglich Rohrhalter schnell, sicher und mit relativ geringem Arbeitsaufwand und in nicht mühsamer, sondern aufrechter Haltung an ausgewählten Stellen auf Drähten von Trägermatten oder dergleichen zu befestigen.

Bei der in Fig. 2 dargestellten Ausführungsform des Auswurfschachtes 7 ist dieser auf der Rückseite, d.h. auf der Seite, die dem Positionierstab 9 abgelegen ist und in die das Magazin mündet, geschlossen dargestellt. Bei einer anderen - nicht dargestellten - Ausführungsform fehlt es an dieser Rückwand, d.h. der Auswurfschacht ist im Bereich der Einmündung des Magazins 10 vollständig offen. Die Rohrhalter 12 gleiten auch bei dieser Ausführungsform auf dem das Magazin bildenden Stab, bis sie in den Innenraum des Auswurfschachtes 7 gelangen, wobei diese Gleitbewegung durch die vordere Wand des Auswurfschachtes begrenzt wird. Hinten ist der Auswurfschacht bei dieser Ausführungsform - wie gesagt - offen. Von den in Fig. 1 dargestellten Füßen am unteren Ende des Auswurfschachtes fehlt der hintere, d.h. der an das Magazin 10 angrenzende Fuß. Im übrigen funktioniert diese Ausführungsform so wie diejenige, die in der Zeichnung dargestellt wurde.

## Patentansprüche

1. Befestigungssystem für Rohrhalter für Fußbodenheizungsrohre mit einer Befestigungsvorrichtung für die Rohrhalter, die eine Öffnung (20) zur Aufnahme eines Heizungsrohres und einen mit dieser verbundenen Tunnel (18) zum Aufsetzen auf den Draht (15) einer Trägermatte oder dergleichen aufweisen, wobei die Befestigungsvorrichtung einen am Eingang eines Auswurfschachtes (7) angeordneten Auswurfstempel (5) aufweist, der nach oben zu einem in einem Handgriff (1) gelegenen Bedienungshebel (3) geführt ist, und mit seinem dem Bedienungshebel abgelegenen Ende in den Bereich der Öffnung (20) für das Heizungsrohr verläuft, um die Rohrhalter (12) bei Betätigung des Bedienungshebels aus dem Auswurfschacht (7) auf den Draht (15) der Trägermatte zu drücken, dadurch gekennzeichnet, daß der Rohrhalter (12) seitlich an der Öffnung (20) für das Heizungsrohr in Aufsetzrichtung nach oben gerichtete Schrägflächen (19) aufweist, denen entsprechend gerichtete und angeordnete Schrägflächen (17) an dem Auswurfschacht (7) zugeordnet sind, die auf den Schrägflächen (19) des Rohrhalters derart gleiten, daß der Tunnel (18) gespreizt und auf den Draht (15) federnd aufgesetzt wird.

2. Befestigungssystem nach Anspruch 1, dadurch gekennzeichnet, daß für den Auswurfstempel (5) eine Rückstellfeder (6) vorgesehen ist.

3. Befestigungssystem nach Anspruch 1 oder 2, dadurch gekennzeichnet, daß der Auswurfstempel (5) in einem Führungsrohr (4) geführt ist, das den Auswurfschacht (7) mit dem obenliegenden Handgriff (1) verbindet.

4. Befestigungssystem nach einem oder mehreren der Ansprüche 1, 2 oder 3, dadurch gekennzeichnet, daß parallel zu dem Auswurfstempel (5) zwischen dem Handgriff (1) und dem Auswurfschacht (7) ein Magazin (10) zur Aufnahme einer Vielzahl von Rohrhaltern (12) vorgesehen ist.

5. Befestigungssystem nach Anspruch 4, dadurch gekennzeichnet, daß am Aufgabeende des Magazins (10) eine Sperre (11) für die aufgesteckten Rohrhalter (12) vorgesehen ist.

6. Befestigungssystem nach einem oder mehreren der vorstehenden Ansprüche, dadurch gekennzeichnet, daß an der in Gebrauchslage dem Draht (15) der Trägermatte zugekehrten Fläche des Auswurfschachtes (7) keilförmige Führungshilfen (8) für den Draht (15) vorgesehen sind.

7. Befestigungssystem nach einem oder mehreren der vorstehenden Ansprüche, dadurch gekennzeichnet, daß an der Vorderseite des Auswurfschachtes (7) ein die Lage des Tunnels (18) des auszuwerfenden Rohrhalters (12) kennzeichnender Positionierstab (9) angebracht ist.

## Claims

1. Fixing system for pipe holders for underfloor heating pipes with a fixing device for the pipe holders, which has an opening (20) for receiving a heating pipe and a tunnel (18) connected thereto for placing on the wire (15) of a support mat or the like, the fixing device having an ejection member (5) located at the inlet of an ejection shaft (7) and which is guided upwards to an operating lever (3) located in a handle (1) and runs with its end remote from the operating lever in the vicinity of the opening (20) for the heating pipe, so as to press the pipe holders (12) on operating the operating lever out of the ejection shaft (7) onto the wire (15) of the support mat, characterized in that laterally with respect to the opening (20) for the heating pipe the pipe holder (12) has in the fitting direction upwardly directed sloping surfaces (19), with which are associated correspondingly directed and arranged sloping surfaces (17) on the ejection shaft (7), which so slide on the sloping surfaces (19) of the pipe holder that the tunnel (18) is expanded and resiliently mounted on the wire (15).

2. Fixing system according to claim 1, characterized in that a return spring (6) is provided for the ejection member (5).

3. Fixing system according to claim 1 or 2, characterized in that the ejection member (5) is guided in a guidance pipe (4), which links the ejection shaft (7) with the top handle (1).

4. Fixing system according to one or more of the claims 1, 2 or 3, characterized in that a magazine (10) for receiving a plurality of pipe holders (12) is provided in parallel to the ejection member (5) between the handle (1) and the ejection shaft (7).

5. Fixing system according to claim 4, characterized in that a locking device (11) for the mounted pipe holders (12) is provided at the delivery end of the magazine (10).

6. Fixing system according to one or more of the preceding claims, characterized in that wedge-shaped guidance aids (8) for the wire (15) are provided on the surface of the ejection shaft (7) facing the support mat wire (15) in the use position.

7. Fixing system according to one or more of the preceding claims, characterized in that to the front of the ejection shaft (7) is fitted a positioning rod (9) indicating the position of the tunnel (18) of the pipe holder (12) to be ejected.

## Revendications

1. Système de fixation pour élément de support pour tuyaux de chauffage par le sol avec un dispositif de fixation pour les éléments de support qui présentent une ouverture (20) pour le logement d'un tuyau de chauffage et un tunnel (18) relié à celle-ci pour la pose sur le fil (15) d'un tapis support ou similaire, le dispositif de fixation présentant un poinçon d'éjection (5) disposé à l'entrée d'une cage d'éjection (7), qui est guidé vers le haut jusqu'à un levier de commande (3) situé dans une poignée (1), et va avec son extrémité éloignée du levier de commande dans la zone de l'ouverture (20) pour le tuyau de chauffage, pour faire sortir les supports de tuyau (12) de la cage d'éjection (7) et les appuyer sur le fil (15) du tapis support, par l'actionnement du levier de commande, caractérisé en ce que le support de tuyau (12) présente des surfaces inclinées (19) orientées vers le haut dans le sens de pose sur le côté de l'ouverture (20) pour le tuyau de chauffage, surfaces auxquelles sont attribuées des surfaces inclinées (17), orientées et disposées de façon appropriée, sur la cage d'éjection (7), surfaces qui glissent sur les surfaces inclinées (19) du support de tuyau de telle façon que le tunnel (18) est élargi et posé de façon élastique sur le fil (15).

2. Système de fixation selon la revendication 1, caractérisé en ce qu'un ressort de rappel (6) est prévu pour le poinçon d'éjection (5).

3. Système de fixation selon la revendication 1 ou 2, caractérisé en ce que le poinçon d'éjection (5) est guidé dans un tuyau de guidage (4) qui relie la cage d'éjection (7) à la poignée (1) supérieure.

4. Système de fixation selon l'une ou plusieurs des revendications 1, 2 ou 3, caractérisé en ce qu'un magasin (10) pour le logement d'un grand nombre de supports de tuyau (12) est prévu parallèlement au poinçon d'éjection (5) entre la poignée (1) et la cage d'éjection (7).

5. Système de fixation selon la revendication 4, caractérisé en ce qu'un dispositif de blocage (11) est prévu, sur l'extrémité de chargement du magasin (10), pour les supports de tuyau emboîtés (12).

6. Système de fixation selon l'une quelconque ou plusieurs des revendications précédentes, caractérisé en ce que des aides de guidage (8) cunéiformes sont prévues, pour le fil (15), sur la surface de la cage d'éjection (7), adjacente au fil (15) du tapis support, dans la position d'utilisation.

7. Système de fixation selon l'une ou plusieurs des revendications précédentes, caractérisé en ce qu'une barre de positionnement (9) caractérisant l'emplacement du tunnel (18) du support de tuyau (12) à éjecter est disposée sur la face avant de la cage d'éjection (7).
